Europäisches Patentamt

European Patent Office

Office européen des brevets

(19)

(11) Numéro de publication : **0 334 706 B1**

(12)                                 **FASCICULE DE BREVET EUROPEEN**

(45) Date de publication du fascicule du brevet :
29.05.91 Bulletin 91/22

(51) Int. Cl.⁵ : **F16B 19/10**

(21) Numéro de dépôt : **89400660.0**

(22) Date de dépôt : **09.03.89**

(54) Agrafe d'épinglage à tube protecteur pour tôles ou analogues.

(30) Priorité : **11.03.88 FR 8803221**

(43) Date de publication de la demande :
**27.09.89 Bulletin 89/39**

(45) Mention de la délivrance du brevet :
**29.05.91 Bulletin 91/22**

(84) Etats contractants désignés :
**DE ES GB IT NL**

(56) Documents cités :
**DE-U- 1 678 410
DE-U- 1 829 243
GB-A- 1 269 953**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Médard, Joseph
32, Chemin de Fenouillet
F-31200 Toulouse (FR)**

(74) Mandataire : **Bonnetat, Christian et al
CABINET BONNETAT 23, Rue de Léningrad
F-75008 Paris (FR)**

EP 0 334 706 B1

## Description

La présente invention concerne les agrafes d'épinglage pour tôles ou plaques analogues.

On sait que, en préparation à l'assemblage définitif de tôles, par exemple par rivetage, on procède généralement à un assemblage temporaire desdites tôles, au moyen d'agrafes d'épinglage traversant des trous en regard pratiqués dans celles-ci.

Par exemple, par le document DE-U-1 678 410, on connaît déjà une agrafe pour l'épinglage d'un ensemble de tôles ou analogues comportant :

– une face d'appui, destinée à venir au contact de la face extérieure d'une desdites tôles externes dudit ensemble ;

– au moins un élément allongé, destiné à traverser des trous en regard pratiqués dans les tôles dudit ensemble et pourvu d'un bec d'accrochage ; et

– un mécanisme pour engendrer un déplacement relatif, de direction longitudinale, entre ledit élément allongé et ladite face d'appui, et un déplacement transversal dudit bec d'accrochage, afin que lesdites tôles puissent être pressées entre ladite face d'appui et ledit bec d'accrochage, qui est alors accroché derrière la face extérieure de l'autre tôle ex terne dudit ensemble, en bordure du trou correspondant.

D'autres agrafes d'épinglage de tôles sont par exemple décrites dans le brevet français FR-A-789 945 du 13 Mai 1935, dans son Certificat d'Addition FR-A-48 048 du 13 Mai 1936, ou encore dans le brevet français FR-A-1 492 310 du 8 Juillet 1966.

On sait, par ailleurs, que de plus en plus on applique entre les différentes tôles des produits d'interposition plus ou moins visqueux et généralement polymérisables, servant à assurer une protection contre la corrosion et/ou une barrière d'étanchéité ou pour toute autre raison.

Ces produits d'interposition doivent être localement éliminés par fluage, avant polymérisation, au niveau des points de fixation, pour permettre un bon assemblage, comme il est expliqué, par exemple, dans le brevet FR-A-1 492 310.

Dans ces conditions, les agrafes d'épinglage, doivent appliquer un effort important tendant à rapprocher les tôles jusqu'au contact métal-métal ; les produits d'interposition fluent et viennent partiellement se répandre dans les trous dans lesquels sont disposées les agrafes et s'y polymérise. De ce fait, celles-ci sont souillées par le produit d'interposition, sont difficiles à retirer lorsqu'on désire poser les moyens de fixation définitifs (ceci entrainant fréquent des déformations ou des ruptures des agrafes), et doivent être nettoyées avant toute prochaine utilisation, si bien que la durée de vie de ces agrafes est très réduite. Pour les agrafes de grand diamètre en particulier, pour lesquelles les efforts à appliquer sont considérables, le fluage et la polymérisation des produits d'interposition entrainent une détérioration des agrafes, telle que celles-ci ne peuvent guère être utilisées plus d'une fois ; comme ces agrafes sont relativement onéreuses, il est préféré de les remplacer par des boulons, ce qui nécessite généralement la présence de deux personnes, l'une du côté de la vis, l'autre du côté de l'écrou (boulons qu'il faut, de plus, resserrer au fur et à mesure du fluage du produit).

L'invention a pour objet de supprimer ces inconvénients et de réaliser une agrafe :

– qu'il n'est plus nécessaire de nettoyer entre deux utilisations ;

– et pour laquelle les efforts d'extraction sont considérablement réduits, ce qui évite la détérioration de ladite agrafe et augmente en conséquence sa durée de vie.

A cette fin, selon l'invention, l'agrafe pour l'épinglage d'un ensemble de tôles ou analogues, du type spécifié ci-dessus, est remarquable en ce qu'elle comporte un tube protecteur, réalisé en une matière déformable entourant ledit élément allongé, y compris ledit bec d'accrochage.

Ainsi, ledit tube protecteur, qui coiffe ledit bec d'accrochage, protège le mécanisme de l'agrafe d'épinglage contre une infiltration du produit d'interposition, lors du fluage de celui-ci vers l'intérieur desdits trous pratiqués dans les tôles. Lorsque ladite agrafe, après mise en place dans lesdits trous dudit élément allongé et du tube protecteur qui l'entoure, est commandée par l'intermédiaire dudit mécanisme pour que le bec d'accrochage prenne appui derrière le bord du trou correspondant, ce nec d'accrochage déforme localement ledit tube protecteur et prend appui sur ladite autre tôle ex terne par l'intermédiaire de la partie déformée dudit tube protecteur.

Ledit tube protecteur peut être réalisé en une matière plastiquement déformable, telle que par exemple un alliage d'aluminium. Notamment dans ce cas, le tube protecteur doit être amovible, afin de permettre le démontage de l'agrafe, lui-même restant en place à l'intérieur desdits trous et étant éliminé lors d'une opération ultérieure d'alésage de ceux-ci, en vue de la pose du moyen de fixation définitif, par exemple un rivet.

En revanche, ledit tube protecteur peut être réalisé en une matière élastiquement déformable, telle que par exemple une matière synthétique. Ce tube protecteur peut alors être soit solidaire de ladite agrafe, soit amovible par rapport à celle-ci. Dans les deux cas, le tube protecteur peut être sorti desdits trous et il est éventuellement réutilisable pour une autre opération d'agrafage.

Dans un mode avantageux de réalisation, ledit tube protecteur est obturé à son extrémité voisine dudit bec d'accrochage. Ainsi, on évite toute pénétration de produit d'interposition à l'intérieur de celui-ci lorsque l'agrafe est mise en place à l'intérieur desdits trous.

Par ailleurs, notamment, lorsque le tube protecteur est amovible, il est avantageux qu'il comporte, à son extrémité voisine de ladite face d'appui, une collerette susceptible de venir s'appuyer à la périphérie du trou de la face extérieure de la tôle externe correspondante. Ainsi, on obtient un positionnement correct de ladite agrafe et on évite l'infiltration de produit d'interposition à l'intérieur de celle-ci.

L'invention peut être mise en oeuvre, quel que soit le type de l'agrafe. Toutefois, il est particulièrement avantageux que celle-ci soit du type comportant au moins deux éléments allongés constitués par des lames élastiques ou analogues, pourvues de becs d'accrochage opposés et liées audit mécanisme, ainsi qu'un écarteur desdites lames, lié à ladite face d'appui. Dans ce cas, ledit mécanisme est susceptible d'engendrer, simultanément, le déplacement longitudinal desdits éléments allongés et le déplacement transversal desdits becs d'accrochage.

Les figures du dessin annexé feront bien comprendre comment l'invention peut être réalisée. Sur ces figures, des références identiques désignent des éléments semblables.

La figure 1 est une vue en coupe axiale d'un exemple de réalisation de l'agrafe d'épinglage conforme a l'invention.

Les figures 2, 2a et 2b illustrent schématiquement l'utilisation de l'agrafe de la figure 1, dans le cas où le tube protecteur est amovible et réalisé en une matière plastiquement déformable.

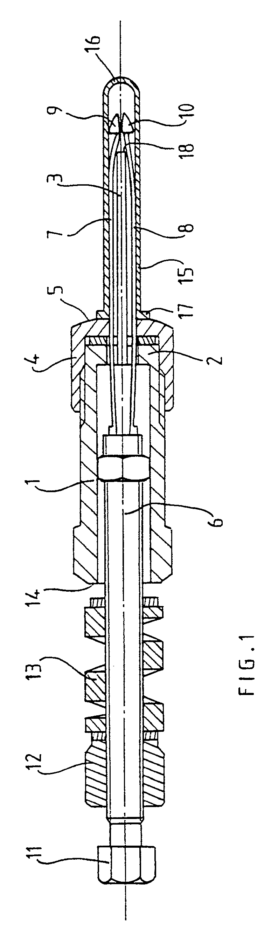

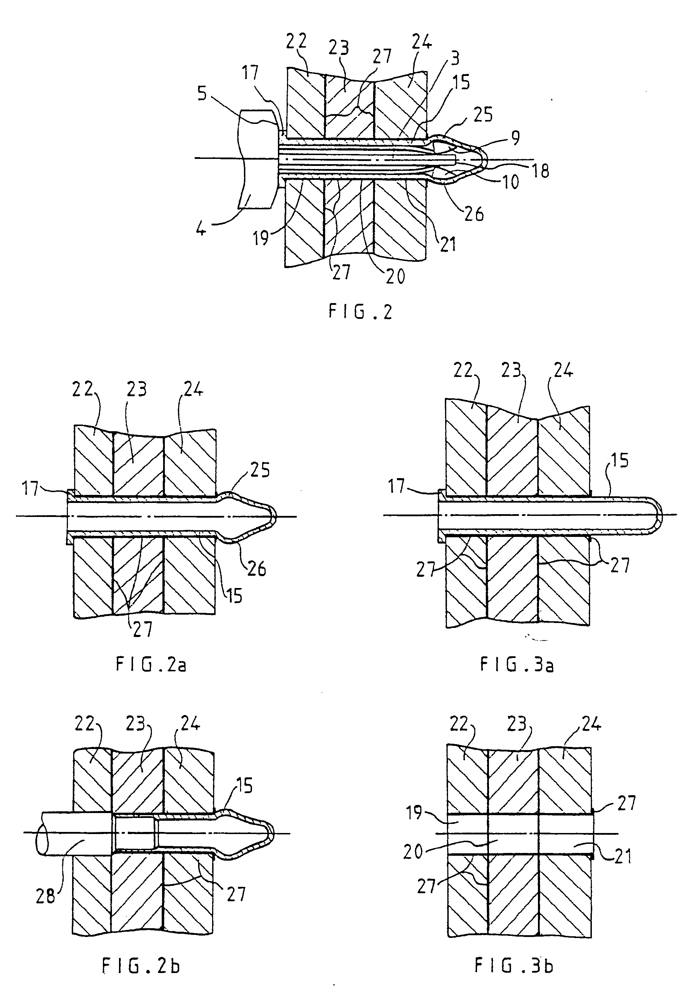

Les figures 2, 3a et 3b illustrent schématiquement l'utilisation de l'agrafe de la figure 1, dans le cas où le tube protecteur est amovible et réalisé en une matière élastiquement déformable.

L'agrafe d'épinglage pour un ensemble de tôles, montrée par la figure 1, comporte un corps creux 1, obturé à l'une de ses extrémités par un fond percé 2. Une tige 3 est solidaire du fond 2 et fait saillie vers l'extérieur, du côté opposé audit corps 1. Un capuchon 4 recouvre l'extrémité du corps 1 voisine du fond 2 et est réalisé en une matière non susceptible de marquer lesdites tôles. Ce capuchon 4 comporte une face d'appui 5, recouvrant ledit fond 2.

A l'intérieur du corps 1 peut coulisser une tige filetée 6, solidaire à son extrémité en regard du fond 2, de deux lames élastiques 7 et 8, respectivement pourvues à leurs extrémités libres de becs d'accrochage opposés 9 ou 10.

Lesdites lames élastiques 7 et 8 traversent le fond 2 et la face d'appui 5 et sont disposées de part et d'autre de la tige 3. Grâce à la forme et à l'élasticité desdites lames, les becs 9 et 10 sont spontanément au contact l'un de l'autre, lorsque la tige 3 n'est pas disposée entre eux.

Du côté opposé aux lames élastiques 7 et 8, la tige filetée 6 est pourvue d'une tête de manoeuvre 11.

Par ailleurs, à l'extérieur du corps creux 1, un écrou 12 est monté sur la tige filetée 6. Un ressort hélicoïdal 13 est monté sur la tige filetée 6, entre l'écrou 12 et le corps 1. L'extrémité du ressort 13, opposée à l'écrou 12, est susceptible de prendre appui sur l'extrémité en regard 14 dudit corps 1.

Un tube protecteur déformable 15 entoure la tige 3 et les lames élastiques 7 et 8, à l'extérieur du corps 1. A son extrémité 16, opposée au corps 1, le tube protecteur 15 est obturé, de toute façon désirée. A son extrémité voisine du corps 1, le tube protecteur 15 est pourvu d'une collerette 17, susceptible de s'appuyer sur la face d'appui 5.

Dans l'exemple représenté sur la figure 1, le tube protecteur 15 est supposé être libre par rapport au corps 1. Dans une variante de réalisation, non représentée, il va de soi que ledit tube protecteur 15 pourrait être solidaire dudit corps 1, par exemple par l'intermédiaire du capuchon 4.

Lorsque l'agrafe de la figure 1 est à l'état détendu (position qui est représentée sur cette figure), les becs d'accrochage 9 et 10 sont au contact l'un de l'autre, en avant de l'extrémité 18 de la tige 3 et le ressort 13 n'est pas sous pression. Le tube 15 entoure alors les becs d'accrochage 9 et 10 avec un faible jeu.

Maintenant, si à partir de cette position détendue, on imprime un mouvement relatif de rotation entre la tête de manoeuvre 11 et l'écrou 12, on tire la tige filetée 6 (et donc les lames élastiques 7 et 8) vers la gauche de la figure 1 et on comprime le ressort 13 entre l'écrou 12 et l'extrémité 14 du corps 1. De plus, au cours du déplacement relatif en translation qui en résulte entre le corps 1 et les lames élastiques 7 et 8, l'extrémité 18 de la tige 3 rencontre les becs d'accrochage 9 et 10 et s'introduit entre eux, en les écartant. L'écartement desdits becs d'accrochage 9 et 10 entraîne alors la déformation radiale locale du tube protecteur 15. Inversement, de façon réversible, on peut revenir à la position détendue par rotation relative de sens inverse entre l'écrou 12 et la tête de manoeuvre 11.

Sur la figure 2, on a représenté l'agrafe en position tendue, après que ledit tube protecteur 15 ait été introduit (à l'état non déformé de la figure 1) à travers des trous en regard 19, 20 et 21 de trois tôles accolées 22, 23 et 24.

De plus, comme cela est représenté par cette figure 2, le déplacement relatif de translation entre le corps 1 et les lames 7 et 8, a pour conséquence que l'ensemble des tôles 22, 23 et 24 se trouve alors pressé entre la face d'appui 5 et la collerette 17, d'une part, et les déformations radiales locales 25 et 26, occasionnées au tube 15 par l'écartement radial des becs d'accrochage 9 et 10. Ceux-ci prennent donc appui à la périphérie du trou 21 de la tôle 24, par l'intermédiaire de la partie déformée 25, 26 du tube 15.

Les tôles 22, 23 et 24 sont donc alors pressées les unes contre les autres par la force du ressort 13, qui est alors comprimé entre l'écrou 12 et le corps 1.

Si un produit d'interposition 27 est prévu entre les tôles 22, 23 et 24, la pression exercée sur celles-ci par l'action du ressort 13 entraîne le fluage dudit produit, qui remplit le jeu entre le tube protecteur 15 et les trous 19, 20 et 21 et peut même s'échapper vers l'extérieur, sur les tôles 22 et 24. Du côté de la tôle 22, l'étanchéité en direction de l'agrafe est assurée par la collerette 17.

Si le tube 15 est en une matière plastiquement déformable, les déformations 25 et 26 sont permanentes, même si l'on ramène l'agrafe à son état détendu, par mouvement relatif de rotation de sens opposé entre la tête de manoeuvre 11 et l'écrou 12. Ce retour à l'état détendu permet de dégager l'agrafe de l'ensemble de tôles 22, 23 et 24, le tube déformé 15 restant toutefois en place (figure 2a).

Pour éliminer le tube 15 et les bavures du produit 27, on procède alors à l'alésage des trous 19, 20 et 21 à leur diamètre définitif, au moyen d'un outil 28 (figure 2b).

Au contraire, si le tube 15 est en matière élastiquement déformable, les déformations 25 et 26 disparaissent, dès que l'agrafe est détendue (voir la figure 3a). Le tube 15 peut alors être éliminé de l'ensemble de tôles 22, 23, 24, simultanément ou postérieurement au démontage de l'agrafe, suivant que ledit tube est solidaire ou non de celle-ci et être éventuellement réutilisé après nettoyage. L'ensemble de tôles 22, 23, 24 se trouve alors dans l'état représenté par la figure 3b. On peut alors éliminer les bavures de produit 27 à l'intérieur des trous 19, 20 et 21 et sur les plaques 22 et 24, par exemple par alésage.

On remarquera que, dans tous les cas, l'élimination de l'agrafe s'effectue aisément puisqu'elle n'a pas été au contact du produit 27 et qu'il est avantageux que le diamètre extérieur du tube protecteur 15 présente un jeu suffisant pour permettre audit produit 27 de fluer entre ledit tube et la paroi des trous 19,20,21. Ce jeu permet de plus de rattraper un éventuel désalignement desdits trous.

## Revendications

1. Agrafe pour l'épinglage d'un ensemble de tôles ou analogues (22, 23, 24), comportant :
   – une face d'appui (5), destinée à venir au contact de la face extérieure d'une (22) desdites tôles externes dudit ensemble ;
   – au moins un élément allongé (7, 8), destiné à traverser des trous en regard (19, 20, 21) pratiqués dans les tôles dudit ensemble et pourvu d'un bec d'accrochage (9, 10) ; et
   – un mécanisme (6, 11, 12, 13) pour engendrer un déplacement relatif, de direction longitudinale, entre ledit élément allongé (7, 8) et ladite face d'appui (5), et un déplacement transversal dudit bec d'accrochage, afin que lesdites tôles puissent être pressées entre ladite face d'appui et ledit bec d'accrochage, qui est alors accroché derrière la face extérieure de l'autre tôle ex terne (24) dudit ensemble, en bordure du trou (21) correspondant, caractérisée en ce qu'elle comporte un tube protecteur (15) réalisé en une matière déformable et entourant ledit élément allongé (7, 8), y compris ledit bec d'accrochage (9, 10).

2. Agrafe selon la revendication 1, caractérisé en ce que ledit tube protecteur (15) est en une matière plastiquement déformable.

3. Agrafe selon l'une des revendications 1 ou 2, caractérisée en ce que ledit tube protecteur (15) est amovible.

4. Agrafe selon l'une des revendications 1 ou 3, caractérisée en ce que ledit tube protecteur (15) est en une matière élastiquement déformable.

5. Agrafe selon l'une des revendications 1 ou 4, caractérisée en ce que ledit tube protecteur (15) est solidaire de ladite agrafe.

6. Agrafe selon l'une des revendications 1 à 5, caractérisée en ce que ledit tube protecteur (15) est obturé à son extrémité (16) voisine dudit bec d'accrochage (9, 10).

7. Agrafe selon l'une des revendications 1 à 6, caractérisée en ce que ledit tube protecteur (15) comporte, à son extrémité voisine de ladite face d'appui (5), une collerette (17).

8. Agrafe selon l'une des revendications 1 à 7, caractérisée en ce qu'elle comporte au moins deux éléments allongés (7,8) constitués par des lames élastiques ou analogues pourvues de becs d'accrochage (9, 10) opposés et liées audit mécanisme (6, 11, 12, 13) ainsi qu'un écarteur (3) lié à la face d'appui (5) et susceptible d'écarter lesdites lames (7, 8) l'une de l'autre.

## Claims

1. Clamp for pinning an assembly of sheet metal plates (22, 23, 24) or the like, comprising :
   – a bearing face (5) adapted to come into contact with the outer face of one (22) of said outer plates of said assembly ;
   – at least one elongated element (7, 8), adapted to pass through holes in register (19, 20, 21) made in the plates of said assembly and provided with a hooking beak (9, 10) ; and
   – a mechanism (6, 11, 12, 13) for creating a relative displacement, of longitudinal direction, between said elongated element (7, 8) and said bearing face (5) and a transversal displacement of said hooking beak, so that said plates may be pressed between said bearing face and said hooking beak, which is then hooked behind the outer face of the other outer plate (24) of said assembly, on the edge of the corresponding hole (21), characterized in that the clamp comprises a protecting tube (15) made of a deformable material and surrounding said elongated element (7, 8), including said hooking beak (9, 10).

2. Clamp according to claim 1, characterized in that said protecting tube (15) is made of a plastically deformable material.

3. Clamp according to one of claims 1 or 2, characterized in that said protecting tube (15) is removable.

4. Clamp according to one of claims 1 or 3, characterized in that said protecting tube (15) is made of an elastically deformable material.

5. Clamp according to one of claims 1 or 4, characterized in that said protecting tube (15) is fast with said clamp.

6. Clamp according to one of claims 1 to 5, characterized in that said protecting tube (15) is obturated at its end (16) adjacent said hooking beak (9, 10).

7. Clamp according to one of claims 1 to 6, characterized in that said protecting tube (15) comprises a flange (17) at its end adjacent said bearing face (5).

8. Clamp according to one of claims 1 to 7, characterized in that it comprises at least two elongated elements (7, 8) constituted by elastic blades or the like provided with opposite hooking beaks (9, 10) and connected to said mechanism (6, 11, 12, 13), as well as a spacer device (3) connected to the bearing face (5) and capable of spacing said blades (7, 8) apart from each other.

## Ansprüche

1. Einsteckbare Klammer für einen Blechsatz oder dgl. (22, 23, 24), die
   - eine Abstützfläche (5) zur Kontaktaufnahme mit der Außenfläche einer (22) der Außenbleche des Satzes,
   - zumindest ein längliches Teil (7, 8), vom dem gegenüberliegende Löcher (19, 20, 21) zu durchqueren sind, die in die Bleche des Satzes eingelassen sind und der mit einer Mitnehmernase (9, 10) versehen ist, und
   - eine Einrichtung (6, 11, 12, 13) zum Erzeugen einer relativen Verschiebung in Längsrichtung zwischen dem länglichen Teil (7, 8) und der Abstützfläche (5) und in transversaler Richtung der Mitnehmernase aufweist, so daß die Bleche zwischen die Abstützfläche und die Mitnehmernase gepreßt werden können, die somit hinter der Außenfläche des anderen Außenbleches (24) des Satzes am Rand des entsprechendem Loches (21) einhakt, dadurch gekennzeichnet, daß sie eine Schutzhülse (15) aufweist, die aus einem formbaren Werkstoff gefertigt ist und das längliche Teil (7, 8) einschließlich der Mitnehmernase (9, 10) umschließt.

2. Einsteckbare Klammer nach Anspruch 1, dadurch gekennzeichnet, daß die Schutzhülse (15) aus einem plastisch formbaren Werkstoff gefertigt ist.

3. Einsteckbare Klammer nach einem der vorhergehenden Ansprüche 1 oder 2, dadurch gekennzeichnet, daß die Schutzhülse (15) abnehmbar ist.

4. Einsteckbare Klammer nach einem der vorhergehenden Ansprüche 1 oder 3, dadurch gekennzeichnet, daß die Schutzhülse (15) aus einem elastisch formbaren Werkstoff gefertigt ist.

5. Einsteckbare Klammer nach einem der vorhergehenden Ansprüche 1 oder 4, dadurch gekennzeichnet, daß die Schutzhülse (15) mit der Klammer fest verbunden ist.

6. Einsteckbare Klammer nach einem der vorhergehenden Ansprüche 1 bis 5, dadurch gekennzeichnet, daß die Schutzhülse (15) an ihrem an die Mitnehmernase (9, 10) angrenzenden Ende (16) verschlossen ist.

7. Einsteckbare Klammer nach einem der vorhergehenden Ansprüche 1 bis 6, dadurch gekennzeichnet, daß die Schutzhülse (15) an ihrem an die Abstützfläche (5) angrenzenden Ende einen Kragen (17) aufweist.

8. Einsteckbare Klammer nach einem der vorhergehenden Ansprüche 1 bis 7, dadurch gekennzeichnet, daß sie zumindest zwei längliche Teile (7, 8), die aus mit gegenüberliegenden und der Einrichtung (6, 11, 12, 13) verbundenen Mitnehmernasen (9, 10) versehenen federnden Stäben oder dgl. bestehen, und einen Abstandhalter (3) aufweist, der mit der Abstützfläche (5) verbunden ist und durch den die Stäbe (7, 8) voneinander in Abstand gehalten werden.

FIG.1

EP 0 334 706 B1

FIG.2

FIG.2a

FIG.3a

FIG.2b

FIG.3b